# EUROPÄISCHE PATENTSCHRIFT

(11) **EP 4 483 089 B1**
(45) Veröffentlichungstag und Bekanntmachung des Hinweises auf die Patenterteilung: **11.03.2026**
(21) Anmeldenummer: 23700640.8
(22) Anmeldetag: 10.01.2023
(51) Int. Cl.: F17C 13/08

(54) **BRENNSTOFFZELLENSYSTEM UND TANKSYSTEM FÜR EIN BRENNSTOFFZELLENSYSTEM**
FUEL CELL SYSTEM, AND TANK SYSTEM FOR A FUEL CELL SYSTEM
SYSTÈME DE PILE À COMBUSTIBLE ET SYSTÈME DE RÉSERVOIR POUR UN SYSTÈME DE PILE À COMBUSTIBLE

(30) Priorität: 22.02.2022 DE 102022201827
(43) Veröffentlichungstag der Anmeldung: 01.01.2025
(73) Patentinhaber: Robert Bosch GmbH, 70442 Stuttgart (DE)
(72) Erfinder: KATZ, Martin, 70469 Stuttgart (DE); WESSNER, Jochen, 73728 Esslingen (DE)
(86) Internationale Anmeldenummer: PCT/EP2023/050381
(87) Internationale Veröffentlichungsnummer: WO 2023/160888

(56) Entgegenhaltungen:
- DE-A1- 102006 046 114
- DE-A1- 102016 014 928
- JP-A- 2013 076 433
- US-B2- 8 408 254

## Beschreibung

### Technisches Gebiet

Die vorliegende Erfindung betrifft ein Brennstoffzellensystem sowie ein Tanksystem für ein Brennstoffzellensystem.

### Stand der Technik

Brennstoffzellensysteme umfassen üblicherweise eine Brennstoffzellenanordnung, z.B. in Form eines Stacks mit einer Vielzahl elektrisch in Reihe geschalteter Brennstoffzellen. Der Brennstoffzellenanordnung wird über eine Brennstoffzufuhrleitung gasförmiger Brennstoff, z.B. Wasserstoff, aus einem Tank zugeführt. Sowohl in stationären als auch in mobilen Anwendungen, wie z.B. in einem Fahrzeug, steht der gasförmige Brennstoff in dem Tank üblicherweise unter hohem Druck, welcher beispielsweise bis zu 700 bar oder mehr betragen kann.

In Fahrzeugen, z.B. in PKWs oder LKWs, können gasförmige Kraftstoffe wie Wasserstoff mit hohem Wirkungsgrad in Brennstoffzellen genutzt werden. Hierzu führen Fahrzeuge entsprechende Tanksysteme mit Tankbehältern mit, in denen der Kraftstoff gespeichert oder gelagert ist. Um bei thermischen oder mechanischen Einwirkungen auf die Tankbehälter ein unkontrolliertes Austreten von Gas zu verhindern, sind die Tankbehälter üblicherweise mit einem Sicherheitsventil versehen, über welches das Gas bei Erreichen eines Grenzdrucks und/oder einer Grenztemperatur im Tankbehälter aus diesem in die Umgebung abgelassen wird. Ein solches Tanksystem für ein Fahrzeug ist beispielsweise in der DE 10 2014 101 139 A1 beschrieben.

In der US 8 408 254 A ist ferner ein Wasserstofftank offenbart, der während der Befüllung durch in Peltier-Element gekühlt wird.

Die JP 2013 076433 A offenbart ein Tanksystem für ein Brennstoffzellensystem, aufweisen: einen sich entlang einer Längsachse erstreckenden Tank zur Aufnahme von Gas, insbesondere Wasserstoff, mit einer die Längsachse entlang einer Umfangsrichtung umschließenden Außenumfangsfläche.

Die US 8 408 254 B2 offenbart eine Wasserstofffüllvorrichtung zum Befüllen eines abnehmbaren Wasserstoffspeicherbehälters mit Wasserstoff.

Aus der DE 10 2016 014928 A1 ist ein Kraftstoffsystem bekannt, insbesondere ein Kraftstoffsystem, insbesondere für einen Kraftwagen, mit einem Tank zum Speichern von Flüssiggas als Kraftstoff, und mit einer Pumpeinrichtung zum Fördern des Flüssiggases zu einer Verbrennungskraftmaschine, insbesondere des Kraftwagens.

Die DE 10 2006 046114 A1 offenbart eine Kühlanordnung zur Kühlung eines Wärmekörpers für ein Luftfahrzeug.

### Offenbarung der Erfindung

Erfindungsgemäß ist ein Tanksystem mit den Merkmalen des Anspruchs 1 und ein Brennstoffzellensystem mit den Merkmalen des Anspruchs 10 vorgesehen.

Nach einem ersten Aspekt der Erfindung umfasst ein Tanksystem für ein Brennstoffzellensystem einen sich entlang einer Längsachse erstreckenden Tank zur Aufnahme von Gas, insbesondere Wasserstoff, mit einer die Längsachse entlang einer Umfangsrichtung umschließenden Außenumfangsfläche und eine thermisch an den Tank gekoppelte bandförmige Kühlvorrichtung mit zumindest einem Peltier-Element, wobei die Kühlvorrichtung an der Außenumfangsfläche des Tanks angeordnet ist und sich entlang der Umfangsrichtung erstreckt. Ferner weist das Tanksystem ein Befestigungselement auf, welche die Außenumfangsfläche des Tanks in Umfangsrichtung umschließt und die Kühlvorrichtung gegen die Außenumfangsfläche des Tanks drückt.

Nach einem zweiten Aspekt der Erfindung umfasst ein Brennstoffzellensystem eine Brennstoffzellenanordnung mit zumindest einer Brennstoffzelle, einem Brennstoffeinlass zum Zuführen von gasförmigem Brennstoff, einem Oxidationsgaseinlass zum Zuführen von Oxidationsgas und einem Produktauslass zum Abführen von Reaktionsprodukten, eine mit dem Brennstoffeinlass verbundene Brennstoffzufuhrleitung und ein Tanksystem nach dem ersten Aspekt der Erfindung, wobei der Tank fluidisch leitend mit der Brennstoffzufuhrleitung verbunden ist.

Eine der Erfindung zugrundeliegende Idee besteht darin, den Tank mittels einer sich entlang der Umfangsrichtung erstreckenden Peltier-Kühlvorrichtung zu kühlen, z.B. wenn eine Temperatur und/oder im Druck einen vorbestimmten Grenzwert erreichen, und die Kühlvorrichtung durch ein Befestigungs- oder Fixierelement, das sich ebenfalls entlang einer Umfangsrichtung des Tanks erstreckt, mechanisch an der Außenumfangsfläche zu befestigen. Das Befestigungselement umschließt die Außenumfangsfläche vollständig, so dass die Kühlvorrichtung zwischen der Außenumfangsfläche und dem Befestigungselement eingeklemmt ist. Es kann vorgesehen sein, dass ein Befestigungselement mehrere entlang der Längsachse beabstandete Kühlvorrichtungen fixiert. Alternativ kann jede Kühlvorrichtung durch ein eigenes Befestigungselement fixiert sein.

Die Kühlvorrichtung weist zumindest ein Peltier-Element auf. Das Peltier-Element weist eine Vielzahl an p- und n-dotierten Halbleiterelementen auf, die abwechselnd an entgegengesetzten Enden durch elektrische Leiterbrücken miteinander kontaktiert sind. Dabei weist das Peltier-Element eine durch eine erste Oberfläche definierte erste Seite auf, welche eine Wärmesenke oder "kalte Seite" bildet, und eine durch eine entgegengesetzt gelegene zweite Oberfläche definierte zweite Seite, welche eine Wärmequelle oder "warme Seite" bildet. Die Kühlvorrichtung ist derart an der Außenumfangsfläche des Tanks angeordnet, dass die die kalte Seite des Peltier-Elements der Außenumfangsfläche zugewandt orientiert ist. Die Kühlvorrichtung umschließt die Außenumfangsfläche des Tanks in der Umfangsrichtung zumindest teilweise, optional vollständig.

Ein Vorteil der Erfindung liegt darin, dass die mechanische Fixierung der bandförmigen Kühlvorrichtung mittels der Befestigungselemente schnell und einfach montierbar ist. Ferner wird durch die mittels der Befestigungselemente auf die Kühlvorrichtung ausgeübte Anpresskraft der Wärmeübergang zwischen Tank und Kühlvorrichtung verbessert. Ein weiterer Vorteil besteht darin, dass die Befestigungselemente in Kontakt mit der Kühlvorrichtung stehen. Dadurch wird die Oberfläche, an der ein Wärmeaustausch mit der Umgebung stattfindet, vergrößert, was die Kühlwirkung der Kühlvorrichtung weiter verbessert.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß manchen Ausführungsformen kann vorgesehen sein, dass die Kühlvorrichtung ein längliches, bandförmiges Peltier-Element aufweist. Alternativ kann vorgesehen sein, dass die Kühlvorrichtung eine Vielzahl, z.B. scheiben- oder plattenförmiger Peltier-Elemente aufweist, die nebeneinander oder aufeinander folgend angeordnet und durch einen bandförmigen Halter miteinander verbunden sind.

Gemäß manchen Ausführungsformen kann vorgesehen sein, dass der Tank zumindest zwei entlang einer Längsachse beabstandete Streben aufweist, die von der Außenumfangsfläche vorstehen, insbesondere entlang einer sich quer zur Längsachse erstreckenden radialen Richtung, wobei die Kühlvorrichtung in Bezug auf die Längsachse zwischen zwei benachbarten Streben angeordnet ist. Die Streben sind somit im allgemeinsten Fall Vorsprünge, die von der Außenumfangsfläche des Tanks vorstehen. Die Streben sind jeweils in der Längsrichtung beabstandet angeordnet. Optional können an einer Stelle in Bezug auf die Längsachse mehrere Streben vorgesehen sein, die in Umfangsrichtung beabstandet angeordnet sind. Beispielsweise kann vorgesehen sein, dass zumindest zwei entlang der Umfangsrichtung beabstandete Streben in einem ersten axialen Endbereich des Tanks und zumindest zwei entlang der Umfangsrichtung beabstandete Streben in einem zweiten axialen Endbereich des Tanks angeordnet sind, der in Bezug auf die Längsachse entgegengesetzt zu dem ersten Endbereich gelegen ist. Die Streben bieten somit vorteilhaft eine einfache Anbringungsmöglichkeit, über die der Tank an eine Träger- oder Ständerstruktur angebunden werden kann.

Gemäß manchen Ausführungsformen kann vorgesehen sein, dass die Kühlvorrichtung mit einer abgewandt von der Außenumfangsfläche des Tanks gelegenen Außenfläche an einer thermisch leitenden Schutzschicht anliegt. Demnach kann eine zweite Oberfläche, "warme" Oberfläche der Kühlvorrichtung durch eine Schutzschicht, z.B. eine Metallfolie abgedeckt sein. Die Schutzschicht ist somit zwischen Befestigungselement und Kühlvorrichtung gelegen. Durch die Schutzschicht wird die Kühlvorrichtung vor mechanischen Einflüssen geschützt. Ferner kann dadurch auf einfache Weise die für die Wärmeabgabe an die Umgebung zur Verfügung stehende Oberfläche vergrößert werden, z.B. indem die Folie größer dimensioniert wird als die Kühlvorrichtung selbst.

Gemäß manchen Ausführungsformen kann vorgesehen sein, dass eine Mehrzahl an Kühlvorrichtungen an der Außenumfangsfläche des Tanks in Bezug auf die Längsachse beabstandet zueinander angeordnet sind, wobei in einem ersten axialen Bereich eine größere durch die Kühlvorrichtungen definierte Kühlleistung installiert ist als in einem zweiten axialen Bereich. Auf diese Weise kann die Wärmeabfuhr in einem vorbestimmten axialen Bereich, z.B. in einem Bereich, in dem ein in den Tank hineinragender Einfüllstutzen endet, vorteilhaft erhöht werden. Gemäß manchen Ausführungsformen kann die installierte Kühlleistung in dem ersten axialen Bereich dadurch vergrößert sein, dass in dem ersten axialen Bereich größerer Flächeninhalt der Außenumfangsfläche durch die Kühlvorrichtungen belegt ist als in dem zweiten axialen Bereich. Beispielsweise kann in dem ersten axialen Bereich eine größere Anzahl an Kühlvorrichtungen je Länge entlang der Längsachse installiert sein als im zweiten axialen Bereich. Alternativ oder zusätzlich kann in dem ersten axialen Bereich eine Kühlvorrichtung installiert sein, die eine größere Breite entlang der Längsachse aufweist, als eine jeweilige Kühlvorrichtung im zweiten axialen Bereich.

Gemäß manchen Ausführungsformen kann vorgesehen sein, dass das Befestigungselement als Netz ausgebildet ist. Das Netz ist insbesondere als Ring gestaltet, das die Außenumfangsfläche umschließt, wobei die jeweilige Kühleinrichtung zwischen dem Netz und der Außenumfangsfläche gelegen ist. Die Gestaltung als Netz bietet den Vorteil, dass dadurch nur ein kleiner Bereich der von der Außenumfangsfläche des Tanks abgewandten Oberfläche der Kühlvorrichtung abgedeckt wird, so dass der konvektive Wärmeübergang zwischen Kühlvorrichtung und Umgebung weiter verbessert wird.

Gemäß manchen Ausführungsformen kann vorgesehen sein, dass das Netz aus einem elastisch verformbaren Material ausgebildet ist, z.B. aus einem Elastomermaterial, und derart elastisch verformt ist, dass es eine senkrecht zur Längsachse gerichtete Vorspannkraft auf die Kühlvorrichtung ausübt, um die Kühlvorrichtung gegen die Außenumfangsfläche des Tanks zu drücken.

Gemäß manchen Ausführungsformen kann vorgesehen sein, dass das Befestigungselement als Schrumpfschlauch ausgebildet ist, welcher auf die Außenumfangsfläche des Tanks aufgeschrumpft ist. Der Schrumpfschlauch kann z.B. hülsenförmiges Teil aus einem thermoplastischen oder elastomeren Material gebildet sein, welcher die Außenumfangsfläche umschließt, wobei die jeweilige Kühleinrichtung zwischen dem Schrumpfschlauch und der Außenumfangsfläche gelegen ist. Der Schrumpfschlauch kann z.B. aus Polyolefin, Polyvinylchlorid, Polytetrafluorethylen oder einem Ethylen-Propylen-Dien-Kautschuk gebildet sein. Somit kann der Schrumpfschlauch als Kalt- oder Heißschrumpfschlauch realisiert sein. Ein Vorteil der Verwendung eines Schrumpfschlauchs als Befestigungselement besteht in dessen einfacher Montage. Ein weiterer Vorteil liegt in der flächigen und entlang des Umfangs gleichmäßigen Anpresskraft, die durch den Strumpfschlauch auf die Kühlvorrichtung ausgeübt wird.

Gemäß manchen Ausführungsformen kann vorgesehen sein, dass der Schrumpfschlauch eine Vielzahl an Öffnungen aufweist, welche die Kühleinrichtung bereichsweise freilegen und die entlang der Umfangsrichtung beabstandet zueinander angeordnet sind. Die Öffnungen sind somit Durchgangsöffnungen, welche den konvektiven Wärmeaustausch zwischen der "warmen" Seite der Kühlvorrichtung und der Umgebung weiter verbessern.

Gemäß manchen Ausführungsformen kann vorgesehen sein, dass das Tanksystem ein fluidisch leitend mit dem Tank verbundenes Sicherheitsventil, welches aus einer Schließstellung in eine Auslösestellung schaltbar ist, um Gas aus dem Tank abzulassen, eine Sensoranordnung zum Erfassen eines Drucks und/oder einer Temperatur im Tank als Zustandsgrößen und eine Steuerungsvorrichtung aufweist, welche signalleitend mit dem Sicherheitsventil, der Kühlvorrichtung und der Sensoranordnung verbunden und dazu eingerichtet ist: das zumindest eine Peltier-Element der Kühlvorrichtung zu energetisieren, um den Tank zu kühlen, wenn zumindest eine von der Sensoranordnung erfasste Zustandsgröße einen ersten Grenzwert überschreitet, und das Sicherheitsventil in die Auslösestellung zu schalten, wenn die zumindest eine von der Sensoranordnung erfasste Zustandsgröße einen zweiten Grenzwert überschreitet, der größer als der erste Grenzwert ist.

Somit kann bei einem moderaten Überschreiten eines ersten Temperaturgrenzwerts und/oder eines ersten Druckgrenzwerts, der Tank mittels der Kühlvorrichtung gekühlt werden, um den thermodynamischen Zustand des Gases im Tank wieder in einen Soll-Bereich zu führen, also Druck und/oder Temperatur zu senken, ohne Gas aus dem Tank in die Umgebung abzulassen. Erst dann, wenn ein höherer, zweiter Grenzwert für die Temperatur und/oder den Druck im Tank überschritten wird, wird das Sicherheitsventil geöffnet. In dem Tank kann der thermodynamische Zustand des Gases durch die ideale Gasgleichung angenähert werden. Somit kann es ausreichen, nur den Druck oder die Temperatur sensorisch zu erfassen, wobei die Erfassung beider Größen als Zustandsgrößen vorteilhaft ist. Die Auswertung der gemessenen Zustandsgrößen erfolgt mittels der Steuerungsvorrichtung, welche z.B. eine Prozessoreinheit, z.B. eine CPU oder dergleichen, und einen Datenspeicher, insbesondere einen nicht-flüchtigen Datenspeicher wie eine Festplatte, einen Flash-Speicher, einen SD-Speicher oder dergleichen aufweisen kann. Der Datenspeicher ist durch die Prozessoreinheit auslesbar und kann z.B. eine durch den Prozessor ausführbare Software speichern, die die Steuerungsvorrichtung zur Ausgabe elektrischer und/oder elektromagnetischer Signale veranlasst, um die Kühlvorrichtung und das Sicherheitsventil zu betätigen. Ein Vorteil dieser Ausführungsform liegt darin, dass nur dann Gas in die Umgebung über das Sicherheitsventil abgelassen wird, wenn dies unbedingt nötig ist, da kleinere Abweichungen vom Soll-Zustand effizient durch die Kühlvorrichtung abgefangen werden können.

Im Folgenden wird die Erfindung unter Bezugnahme auf die Figuren der Zeichnungen erläutert. Von den Figuren zeigen:
- Fig. 1: eine schematische Darstellung eines Brennstoffzellensystems gemäß einem Ausführungsbeispiel der Erfindung;
- Fig. 2: eine schematische Schnittansicht eines Tanks eines Tanksystems gemäß einem Ausführungsbeispiel der Erfindung, wobei die Schnittansicht bei einem Schnitt parallel zu einer Längsachse des Tanks ergibt;
- Fig. 3: eine Draufsicht auf eine Außenumfangsfläche eines Tanks eines Tanksystems gemäß einem Ausführungsbeispiel der Erfindung;
- Fig. 4: eine Draufsicht auf eine Außenumfangsfläche eines Tanks eines Tanksystems gemäß einem weiteren Ausführungsbeispiel der Erfindung;
- Fig. 5: eine Schnittansicht des in Fig. 3 oder 4 gezeigten Tanks bei einem Schnitt quer zur Längsachse des Tanks;
- Fig. 6: eine Draufsicht auf eine Außenumfangsfläche eines Tanks eines Tanksystems gemäß einem weiteren Ausführungsbeispiel der Erfindung; und
- Fig. 7: ein Flussdiagramm eines Verfahrens zum Überwachen eines Tanksystems.

In den Figuren bezeichnen dieselben Bezugszeichen gleiche oder funktionsgleiche Komponenten, soweit nichts Gegenteiliges angegeben ist.

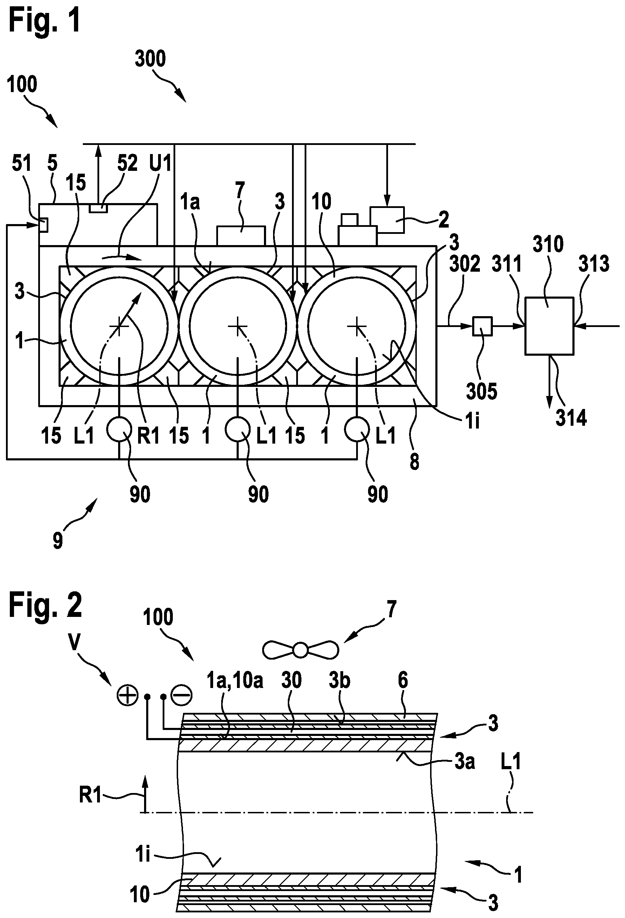

Fig. 1 zeigt schematisch ein Brennstoffzellensystem 300 wie es beispielsweise in einer mobilen Anwendung, wie z.B. einem Fahrzeug, insbesondere einem Straßenfahrzeug, eingesetzt werden kann. Wie in Fig. 1 gezeigt, weist das Brennstoffzellensystem 300 ein Tanksystem 100, eine Brennstoffzellenanordnung 310 und eine Brennstoffzufuhrleitung 302 auf.

Die Brennstoffzellenanordnung 310 ist in Fig. 1 lediglich symbolisch dargestellt und umfasst zumindest eine Brennstoffzelle. Optional kann die Brennstoffzellenanordnung 310 eine Vielzahl elektrisch in Reihe geschalteter Brennstoffzellen aufweisen, die z.B. zu einem sogenannten Stack angeordnet sein können. Jede Brennstoffzelle umfasst eine Anode, eine Kathode und einen zwischen Anode und Kathode angeordneten Elektrolyten. Wie in Fig. 1 schematisch dargestellt, weist die Brennstoffzellenanordnung 310 einen Brennstoffeinlass 311, einen Oxidationsgaseinlass 313 und einen Produktauslass 314 auf. Die Brennstoffzufuhrleitung 302 ist mit dem Brennstoffeinlass 311 und dem Tanksystem 100 verbunden, so dass gasförmiger Brennstoff, wie z.B. Wasserstoff, aus dem Tanksystem 100 durch die Brennstoffzufuhrleitung 302 dem Brennstoffeinlass 311 zuführbar ist. Über den Oxidationsgaseinlass 313 ist der Brennstoffzellenanordnung 310 Oxidationsgas, wie z.B. Umgebungsluft, zuführbar. Das Oxidationsgas wird der Kathode und der Brennstoff der Anode der zumindest einen Brennstoffzelle zugeführt, wobei der Anode eine Oxidationsreaktion und an der Kathode eine Reduktionsreaktion stattfindet. Die Reaktionsprodukte werden über den Produktauslas 314 abgelassen.

Wie in Fig. 1 weiterhin schematisch dargestellt, kann in der Brennstoffzufuhrleitung 302 optional ein Durchflussregelventil 305 angeordnet sein, um den Massenstrom an Brennstoff in die Brennstoffzellenanordnung 310 einfacher variieren zu können.

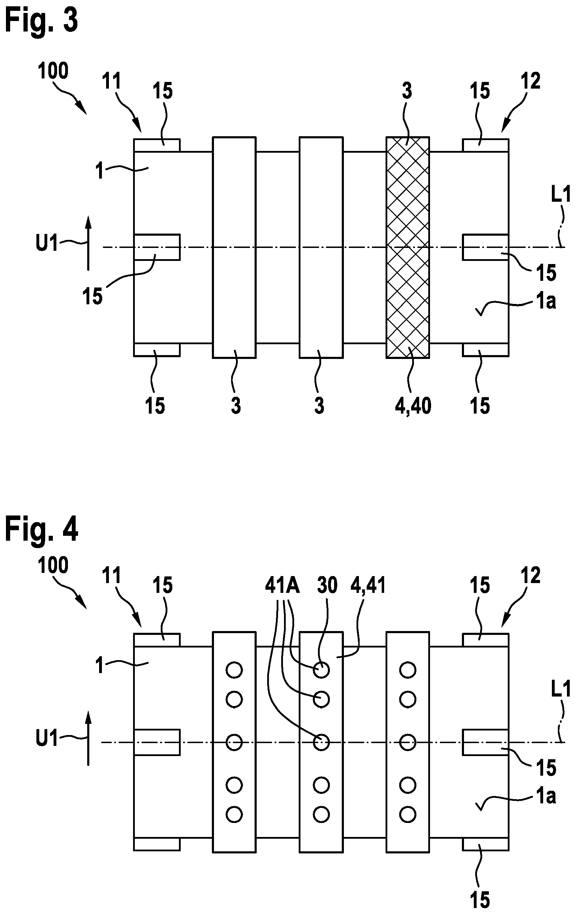

Wie in Fig. 1 schematisch und rein beispielhaft gezeigt, weist das Tanksystem 100 einen Tank 1, ein optionales Sicherheitsventil 2, eine Kühlvorrichtung 3, eine optionale Sensoranordnung 9 und eine optionale Steuerungsvorrichtung 5 auf. Optional kann ferner ein Ventilator oder Gebläse 7 vorgesehen sein, der in Fig. 1 lediglich symbolisch als Block dargestellt ist. Ferner weist das Tanksystem 100 zumindest ein Befestigungselementen 4 auf, wie dies in den Fign. 3 bis 5 beispielhaft und schematisch gezeigt ist.

In Fig. 1 ist rein beispielhaft ein Tanksystem 100 gezeigt, das mehrere, in diesem Beispiel drei einzelne Tanks 1 aufweist. Selbstverständlich kann auch vorgesehen sein, dass das Tanksystem 100 lediglich einen einzigen Tank 1 oder eine andere Anzahl als drei Tanks 1 umfasst. Im Folgenden wird daher aus Gründen der Übersichtlichkeit von "einem Tank" gesprochen. Die Ausführungen gelten jedoch stets für alle Tanks des Systems 100, sofern nichts Anderes angegeben ist. Der Tank 1 ist zur Aufnahme von Gas, insbesondere Wasserstoff, ausgebildet. Beispielsweise kann der Tank 1 eine Außenwand 10 aufweisen, welche mit einer Innenumfangsfläche 1i ein Innenvolumen zur Aufnahme des Gases umgrenzt.

Beispielsweise kann der Tank 1 zylinderförmig gestaltet sein, wie dies in der Schnittansicht von Fig. 1 schematisch gezeigt ist. Allgemein erstreckt sich der Tank 1 sich entlang einer Längsachse L1. Eine entgegengesetzt zu der Innenumfangsfläche 1i gelegene Außenumfangsfläche 1a des Tanks 1 umschließt die Längsachse L1 in einer Umfangsrichtung U1 und kann z.B. als Zylinderfläche ausgebildet sein. Die Längsachse L1 entspricht im Fall eines zylinderförmigen Tanks 1 der Zylinderachse. Wenn mehrere Tanks 1 vorgesehen sind, wie in Fig. 1 beispielhaft gezeigt, können diese nebeneinanderliegend angeordnet sein, z.B. derart, dass sich deren Längsachsen L1 parallel zueinander erstrecken. Optional kann der Tank 1 in einem Tankgehäuse 8 aufgenommen sein. Wie in Fig. 1 beispielhaft gezeigt, können im Falle mehrerer Tanks 1 alle Tanks 1 in demselben Tankgehäuse 8 aufgenommen sein.

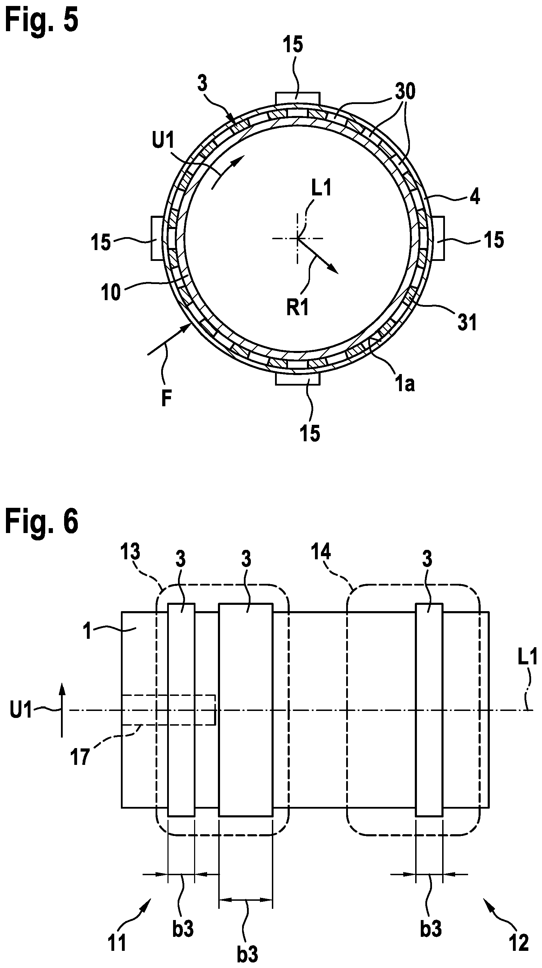

Weiterhin optional kann der Tank 1 zumindest zwei Streben 15 aufweisen, die von der Außenumfangsfläche 1a vorstehen. Wie in den Fign. 3 und 4 beispielhaft gezeigt, können jeweils in entgegengesetzten ersten und zweiten axialen Endbereichen 11, 12 des Tanks 1 mehrere entlang der Umfangsrichtung U1 des Tanks 1 zueinander beabstandet angeordnete Streben 15 vorgesehen sein. Allgemein können jedoch auch lediglich zumindest zwei Streben 15 vorgesehen sein, die entlang der Längsachse L1 beabstandet angeordnet sind. Wie insbesondere in Fig. 1 erkennbar ist, können die Streben 15 beispielsweise in einer sich senkrecht zur Längsachse L1 erstreckenden radialen Richtung R1 von der Außenumfangsfläche 1a des Tanks 1 vorstehen. Wie in den Fign. 1 und 5 beispielhaft gezeigt, können z.B. vier Streben 15 in jedem Endbereich 11, 12 vorgesehen sein, die in gleichen Winkelabständen zueinander entlang der Außenumfangsfläche 1a des Tanks 1 angeordnet sind. Wie in den Fig. 3 und erkennbar ist, können die Streben 15 als im Wesentlichen blockförmige Elemente oder Träger ausgebildet sein. Allgemein sind die Streben 15 fest mit dem Tank 1 bzw. der Außenwandung 10 des Tanks 1 verbunden, z.B. mit diesem verschweiß, verklebt oder dergleichen. Wie in Fig. 1 beispielhaft gezeigt, können die Streben 15 sich zwischen der Außenwand 10 des Tanks 1 und dem Tankgehäuse 8 erstrecken, so dass der Tank 1 über die Streben 15 an das Tankgehäuse 8 angebunden ist.

Der Tank 1, insbesondere dessen Innenvolumen, ist fluidisch leitend mit der Brennstoffzufuhrleitung 302 verbunden. Dadurch kann Gas aus dem Tank 1 der Brennstoffzellenanordnung 310 zugeführt werden.

Wie in den Fign. 3 und 4 erkennbar ist, ist die Kühlvorrichtung 3 als eine bandförmige Komponente ausgebildet. Die Kühlvorrichtung 3 weist zumindest ein Peltier-Element 30 auf. Das Peltier-Element 30 weist einen üblichen Aufbau auf, bei dem eine Vielzahl an p- und n-dotierten Halbleiterelementen abwechselnd an entgegengesetzten Enden durch elektrische Leiterbrücken miteinander kontaktiert sind. Fig. 2 zeigt schematisch eine abgebrochene, vergrößerte Schnittansicht eines Tanks 1 aus Fig. 1, die sich bei einem Schnitt entlang der Längsachse L1 ergibt. Das Peltier-Element 30 weist eine durch eine erste Oberfläche definierte erste Seite auf, welche eine Wärmesenke oder "kalte Seite" bildet, und eine durch eine entgegengesetzt gelegene zweite Oberfläche definierte zweite Seite, welche eine Wärmequelle oder "warme Seite" bildet. Die Kühlvorrichtung 3 und insbesondere das Peltier-Element 30 ist thermisch an den Tank 1 gekoppelt. Wie insbesondere in den Fign. 2 und 5 gezeigt, ist die Kühlvorrichtung 3 hierzu in thermisch leitendem Kontakt mit der Außenumfangsfläche 1a des Tanks 1 angeordnet. Wie in Fig. 2 schematisch dargestellt, kann die Kühlvorrichtung 3 derart orientiert sein, dass eine erste Oberfläche 3a der Kühlvorrichtung 3, an der Außenumfangsfläche 1a des Tanks 1 anliegt. Die erste Oberfläche 3a der Kühlvorrichtung 3 entspricht der "kalten Seite" des Peltier-Elements 30 bzw. die "kalte Seite" des Peltier-Elements 30 ist der Außenumfangsfläche 1a zugewandt orientiert. Wenn das Peltier-Element 3 der Kühlvorrichtung 3 mit einer elektrischen Spannungsquelle V verbunden wird, so dass ein Stromfluss durch das Peltier-Element 3 erfolgt, sinkt die Temperatur der "kalten Seite" bzw. der ersten Oberfläche 3a der Kühlvorrichtung 3. Folglich nimmt das Peltier-Element 30 Wärme vom Tank 1 auf und gibt diese an einer abgewandt von der Außenumfangsfläche 1a des Tanks 1 gelegenen zweiten Oberfläche 3b der Kühlvorrichtung 3 an die Umgebung ab. Wie in Fig. 2 weiterhin gezeigt ist, kann optional vorgesehen sein, dass die Kühlvorrichtung 3 mit der zweiten Oberfläche 3b an einer thermisch leitenden Schutzschicht 6, z.B. einer die Kühlvorrichtung 3 überdeckenden Metallfolie oder dergleichen, anliegt.

Die Kühlvorrichtung 3 kann beispielsweise ein längliches, bandförmiges Peltier-Element 3 aufweisen, das sich entlang der Umfangsrichtung U1 erstreckt. Alternativ kann vorgesehen sein, dass die Kühlvorrichtung eine Vielzahl, z.B. scheiben- oder plattenförmiger Peltier-Elemente 30 aufweist, die nebeneinander oder aufeinander folgend angeordnet und durch einen bandförmigen Halter 31 miteinander verbunden sind, wie dies in Fig. 5 schematisch und rein beispielhaft gezeigt ist.

Wie insbesondere in den Fign. 3 bis 5 schematisch dargestellt, erstreckt sich die Kühlvorrichtung 3 entlang der Umfangsrichtung U1 des Tanks 1. Beispielsweise kann die Kühlvorrichtung 3 die Außenumfangsfläche 1a des Tanks 1 vollständig umschließen, wie dies in Fig. 5 beispielhaft gezeigt ist. Wie in den Fign. 3 und 4 erkennbar ist, können mehrere Kühlvorrichtungen 3 entlang der Längsachse L1 beabstandet zueinander an der Außenumfangsfläche 1a des Tanks 1 angeordnet sein. Allgemein ist zumindest eine Kühlvorrichtung 3 vorgesehen. Wie in den Fign. 3 und 4 gezeigt, kann die Kühlvorrichtung 3 bzw. können die Kühlvorrichtungen 3 zwischen je zwei entlang der Längsachse L1 benachbarten Streben 15 angeordnet sein.

In Fig. 6 ist rein beispielhaft ein Tanksystem 100 dargestellt, welches eine Mehrzahl an Kühlvorrichtungen 3 aufweist, an der Außenumfangsfläche 1a des Tanks 1 in Bezug auf die Längsachse L1 beabstandet zueinander angeordnet sind. Wie in Fig. 6 beispielhaft gezeigt, können in einem ersten axialen Bereich 13 zwei Kühlvorrichtungen 3 vorgesehen sein, während in einem in Bezug auf die Längsachse L1 beabstandet zu dem ersten axialen Bereich 13 gelegenen zweiten axialen Bereich 12 lediglich eine Kühlvorrichtung 3 vorgesehen ist. Ebenso ist in Fig. 6 gezeigt, dass eine der in dem ersten axialen Bereich 13 vorgesehene Kühlvorrichtung 3 eine größere Breite b1 entlang der Längsachse L1 aufweist, als die weiteren Kühlvorrichtungen 3. Somit ist, bezogen auf die Länge des ersten axialen Bereichs 13 und die Länge des zweiten axialen Bereichs 14 entlang der Längsachse L1, in dem ersten axialen Bereich 13 eine größere Fläche der Außenumfangsfläche 1a des Tanks 1 durch Kühlvorrichtungen 3 belegt als im zweiten axialen Bereich 14. Folglich ist in dem ersten axialen Bereich 13 eine größere durch die Kühlvorrichtungen 3 definierte Kühlleistung installiert als in einem zweiten axialen Bereich 14. Anstelle einer Kühlvorrichtung 3 mit größerer Breite b3 kann im ersten Bereich 13 auch eine größere Anzahl an Kühlvorrichtungen 3 vorgesehen sein. Umgekehrt kann auch eine gleiche oder geringere Anzahl an Kühlvorrichtungen 3, dafür aber mit größerer Breite b3, im ersten Bereich 13 vorgesehen sein.

Wie in Fig. 6 beispielhaft gezeigt, kann der erste axiale Bereich 13 unmittelbar benachbart zum ersten Endbereich 11 liegen oder mit diesem übereinstimmen. Wie in Fig. 6 ferner gezeigt, kann ein Ende eines Einfüllstutzens 17, über welchen dem Tank 1 Gas zuführbar ist, in dem ersten axialen Bereich 13 liegen. Allgemein ist es vorteilhaft, wenn der erste axiale Bereich 13 mit Bereichen oder Strukturen des Tanks 1 überlappt, die stark thermisch belastet sind.

Das Befestigungselement 4 dient zur Fixierung der bandförmigen Kühlvorrichtung 3 an der Außenumfangsfläche 1a des Tanks 1. Allgemein kann jede Kühlvorrichtung 3 ein eigenes Befestigungselement 4 vorgesehen sein, oder ein Befestigungselement 4 kann mehrere Kühlvorrichtungen 3 fixieren. Im Folgenden wird der Einfachheit halber von "den Befestigungselementen" gesprochen. Die Ausführungen gelten jedoch ohne Beschränkung der Erfindung auch für den Fall, dass lediglich ein Befestigungselement vorgesehen ist. Wie in den Fign. 3 bis 5 gezeigt, erstrecken sich die Befestigungselemente 4 allgemein entlang der Umfangsrichtung U1 und sind derart angeordnet und ausgebildet, dass sie die Kühlvorrichtung 3 gegen die Außenumfangsfläche 1a des Tanks 1 drücken. Hierzu umschließen die Befestigungselemente die Außenumfangsfläche 1a des Tanks 1 vollständig, und die jeweilige Kühlvorrichtung 3 ist zwischen dem Befestigungselement 4 und der Außenumfangsfläche 1a eingeklemmt bzw. fixiert. Das Befestigungselement 3 übt eine Anpress- oder Vorspannkraft F auf die Kühlvorrichtung 3 aus, die entlang der radialen Richtung R1 gerichtet ist, so dass die Kühlvorrichtung 3 gegen die Außenumfangsfläche 1a des Tanks 1 gedrückt wird.

Wie in Fig. 3 ist rein beispielhaft und lediglich schematisch gezeigt, kann das Befestigungselement 4 als Netz 40 ausgebildet sein. In Fig. 3 ist das Netz 40 aus Gründen der Übersichtlichkeit lediglich an einer der Kühlvorrichtungen 3 gezeigt. Das Netz 40 kann insbesondere aus einem elastisch verformbaren Material ausgebildet sein, z.B. aus einem Elastomermaterial. Beispielsweise kann das Netz 3 als Netzschlauch oder allgemein als gurtförmiges Element ausgeführt sein, welcher in einem unverformten Zustand des Netzes 3 einen Innendurchmesser definiert, der kleiner als ein Außendurchmesser des Tanks 1 mit der daran angeordneten Kühlvorrichtung 3 ist. In dem am Tank 1 installierten Zustand ist das Netz 3 derart elastisch verformt ist, dass es eine senkrecht zur Längsachse L1 gerichtete Vorspannkraft F auf die Kühlvorrichtung 3 ausübt, um die Kühlvorrichtung 3 gegen die Außenumfangsfläche 1a des Tanks 1 zu drücken.

Wie in Fig. 4 ist rein beispielhaft und lediglich schematisch gezeigt, kann als gurtförmiges Befestigungselement 4 auch ein Schrumpfschlauch 41 vorgesehen sein. In Fig. 4 ist beispielhaft gezeigt, dass für jede Kühlvorrichtung 3 ein eigener Schrumpfschlauch 41 vorgesehen ist. Es wäre aber auch denkbar, alle Kühlvorrichtungen 3 mit lediglich einem Schrumpfschlauch 41 zu fixieren. Der Schrumpfschlauch 41 ist auf die Außenumfangsfläche 1a des Tanks 1 aufgeschrumpft, so dass die Kühlvorrichtung 3 zwischen Schrumpfschlauch 41 und Außenumfangsfläche 1a gelegen ist und der Schrumpfschlauch 41 die Anpress- oder Vorspannkraft F auf die Kühlvorrichtung 3 ausübt. Der Schrumpfschlauch 41 kann als schlauchförmiges Teil ausgebildet sein, welches sich bei Erhitzung zusammenzieht. Beispielsweise kann der Schrumpfschlauch 41 aus Polyolefin, Polyvinylchlorid, Polytetrafluorethylen oder einem Thermoplastmaterial. Alternativ kann der Schrumpfschlauch 41 als Kaltschrumpfschlauch aus einem Ethylen-Propylen-Dien-Kautschuk oder einem anderen Elastomer gebildet sein.

Wie in Fig. 5 weiterhin gezeigt, kann der Schrumpfschlauch 41 optional eine Vielzahl an Öffnungen 41A aufweisen, welche die Kühleinrichtung 3 bereichsweise freilegen und die entlang der Umfangsrichtung U1 beabstandet zueinander angeordnet sind.

Das optionale Gebläse 7 ist in Fig. 2 schematisch dargestellt. Beispielsweise kann das Gebläse 7 relativ zu dem Tank 1 so angeordnet sein, dass es einen Fluidstrom zur Wärmeabfuhr über die warme Seite bzw. die zweite Oberfläche 3b der Kühlvorrichtung 3 transportieren kann. Beispielsweise kann das Gebläse 7 gegenüberliegend zu der Kühlvorrichtung 3 angeordnet sein. Wie in Fig. 1 symbolisch dargestellt, kann das Gebläse 7 auch in einer Abluftausnehmung des Tankgehäuses 8 aufgenommen sein, so dass es Umgebungsluft durch eine Zuluftöffnung (nicht gezeigt) in das Tankgehäuse 8 einsaugt und über die Abluftöffnung die Luft wieder aus dem Tankgehäuse 8 ausstößt.

Das optionale Sicherheitsventil 2 kann als schaltbares Ventil, z.B. als Magnetventil, ausgeführt sein. Allgemein ist das Sicherheitsventil 2 zwischen einer Schließstellung und einer Auslösestellung oder Öffnungsstellung schaltbar. In der Schließstellung blockiert das Sicherheitsventil 2 einen Strömungsquerschnitt, so dass ein Gasdurchfluss durch den Strömungsquerschnitt unterbunden ist. In der Öffnungsstellung lässt das Sicherheitsventil einen Gasdurchfluss durch den Strömungsquerschnitt zu. Das Sicherheitsventil 2 ist in Fig. 1 lediglich symbolisch an einer Außenseite des optionalen Tankgehäuses 8 dargestellt. Allgemein ist das Sicherheitsventil 2 fluidisch leitend mit dem Tank 1 verbunden, so dass Gas aus dem Tank 1 abgelassen werden kann, insbesondere in die Umgebung, wenn das Sicherheitsventil 2 aus seiner Schließstellung in seine Auslösestellung geschalten wird. Grundsätzlich kann je Tank 1 ein eigenes Sicherheitsventil 2 vorgesehen sein, um aus jedem Tank 1 einzeln Gas ablassen zu können. Alternativ können mehrere Tanks 1 untereinander fluidisch leitend verbunden sein, so dass ein gemeinsames Sicherheitsventil 2 für die untereinander verbundenen Tanks 1 vorgesehen sein kann.

Die Sensoranordnung 9 ist zum Erfassen eines Drucks und/oder einer Temperatur im Tank 1 als Zustandsgrößen ausgebildet. Wie in Fig. 1 lediglich symbolisch dargestellt ist, kann die Sensoranordnung 9 einen oder mehrere Sensoren 90 aufweisen. Z.B. kann für jeden Tank 1 zumindest ein Drucksensor, der den Druck im jeweiligen Tank 1 erfasst, und/oder ein Temperatursensor, der die Temperatur im jeweiligen Tank 1 erfasst, vorgesehen sein. Die Sensoren 90 können beispielsweise als einfache Druck- bzw. Temperaturwächter ausgebildet sein, die nur beim Überschreiten vorbestimmter Grenzwerte ein entsprechendes Signal ausgeben. Alternativ ist denkbar, dass die Sensoren 90 als Messeinrichtungen ausgebildet sind, die kontinuierlich die jeweilige Messgröße repräsentierende Messsignale ausgeben. Dadurch können die Zustandsgrößen im Tank kontinuierlich erfasst werden.

Die Steuerungsvorrichtung 5 ist in Fig. 1 symbolisch als Block dargestellt und kann z.B. als elektronische Steuerungsvorrichtung 5 ausgebildet sein. Die Steuerungsvorrichtung 5 kann insbesondere eine Eingangsschnittstelle 51, eine Ausgangsschnittstelle 52, eine Prozessoreinheit (nicht gezeigt) und einen Datenspeicher (nicht gezeigt) aufweisen. Der Datenspeicher ist durch die Prozessoreinheit lesbar und kann z.B. durch die Prozessoreinheit ausführbare Software speichern. Die Software kann den Prozessor dazu veranlassen, basierend auf an der Eingangsschnittstelle 51 empfangenen Eingangssignalen Ausgangs- oder Steuersignale zu erzeugen und an der Ausgangsschnittstelle 52 auszugeben. Die Eingangs- und die Ausgangsschnittstelle 51, 52 können z.B. als drahtgebundene Schnittstellen, z.B. Bus-Schnittstellen wie CAN-Bus-Schnittstellen, oder als drahtlose Schnittstellen realisiert sein, wie z.B. WiFi, Bluetooth oder dergleichen. Allgemein sind die Schnittstellen 51, 52 zum Austausch von elektrischen oder elektromagnetischen Signalen eingerichtet. Die Prozessoreinheit kann einen oder mehrere Prozessoren, wie z.B. eine CPU, einen Microcontroller, einen ASIC, einen FPGA oder dergleichen aufweisen. Der Datenspeicher kann insbesondere ein nicht-flüchtiger Datenspeicher sein, wie z.B. eine Festplatte, eine CD- oder DVD-ROM, ein Flash-Speicher, ein SD-Speicher oder dergleichen.

Die Steuerungsvorrichtung 5 ist signalleitend mit dem Sicherheitsventil 2, der Kühlvorrichtung 3 und der Sensoranordnung 9 verbunden. Wie in Fig. 1 schematisch gezeigt, kann die Eingangsschnittstelle 51 mit der Sensoranordnung 9, insbesondere den Sensoren 90 verbunden sein, und die Ausgangsschnittstelle 52 mit dem Sicherheitsventil 2 und der Kühlvorrichtung 3. Die Steuerungsvorrichtung 5 ist dazu eingerichtet, basierend auf den von der Sensoranordnung 9 erhaltenen Mess- oder Detektionssignalen, welche zumindest eine Zustandsgröße (Druck und/oder Temperatur) im Tank 1 repräsentieren, Steuersignale zu erzeugen, um das zumindest eine Peltier-Element 30 der jeweiligen Kühlvorrichtung 3 und/oder das Sicherheitsventil 2 anzusteuern und zu betätigen.

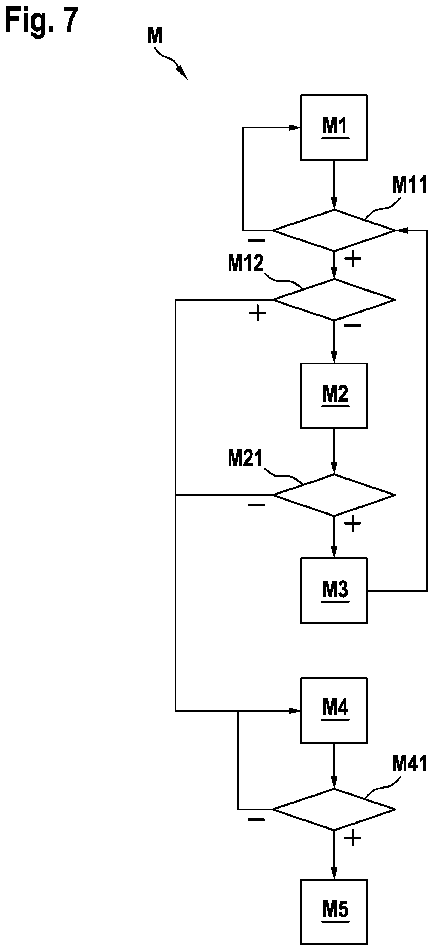

Fig. 7 zeigt ein Flussdiagramm eines Verfahrens M zum Überwachen eines Tanksystems 100, das ausgeführt wird, wenn in dem Tank 1 ein Gas wie z.B. Wasserstoff gespeichert ist. Die Steuerungsvorrichtung 5 kann insbesondere dazu ausgebildet sein, das Tanksystem 100, z.B. ein Tanksystem 100 aus den Fign. 1 bis 6, zur Ausführung dieses Verfahrens M zu veranlassen. Das in Fig. 7 gezeigte Verfahren M wird daher beispielhaft unter Bezugnahme auf die in den Fign. 1 bis 6 gezeigten Tanksysteme 100 erläutert.

In Schritt M1 erfolgt ein Erfassen des Drucks und/oder der Temperatur in dem Tank 1 als Zustandsgrößen mithilfe der Sensoren 90 der Sensoranordnung 9. Wie oben bereits angesprochen, kann dies optional ein kontinuierliches Erfassen der Zustandsgrößen oder lediglich ein Detektieren der Überschreitung eines Grenzwerts umfassen. Die Steuerungsvorrichtung 5 empfängt die die Zustandsgrößen repräsentierenden Signale von der Sensoranordnung 9 als Eingangssignale an der Eingangsschnittstelle 51. Allgemein wird zumindest eine Zustandsgröße erfasst. Der Einfachheit halber wird im Folgenden jedoch von einer Mehrzahl an Zustandsgrößen gesprochen. In Bezug auf den Vergleich der Zustandsgrößen mit einem Grenzwert bedeutet dies, dass jede erfasste Zustandsgröße mit einem jeweiligen Grenzwert verglichen wird. Im Falle von Entscheidungsschritten des Verfahren M kann es im Falle mehrerer erfasster Zustandsgrößen für den positiven Fall ("JA" bzw. logisch "1") insbesondere ausreichen, dass einer der Zustandsgrößen ihren jeweiligen Grenzwert überschreitet oder unterschreitet.

In einem weiteren Schritt M11 vergleicht die Steuerungsvorrichtung 5 mit einem ersten Grenzwert, z.B. einer ersten Temperaturgrenzwert und/oder einem ersten Druckgrenzwert. Wenn die erfassten Zustandsgrößen den ersten Grenzwert überschreiten, wie dies in Fig. 7 durch das Symbol "+" gezeigt ist, geht das Verfahren M zu Schritt M12 über. Wenn die erfassten Zustandsgrößen den ersten Grenzwert nicht überschreiten, wie dies in Fig. 7 durch das Symbol "-" gezeigt ist, geht das Verfahren M zurück zu Schritt M1.

In Schritt M12 vergleicht die Steuerungsvorrichtung 5 die erfassten Zustandsgrößen mit einem zweiten Grenzwert, z.B. mit ersten Temperaturgrenzwert und/oder einem ersten Druckgrenzwert. Der zweite Grenzwert ist größer als der erste Grenzwert. Das heißt, der zweite Temperaturgrenzwert und/oder der zweite Druckgrenzwert liegt bei einer höheren Temperatur bzw. einem höheren Druck als der erste Temperaturgrenzwert bzw. der erste Druckgrenzwert.

Wenn in Schritt M12 ermittelt wird, dass die erfassten Zustandsgrößen den zweiten Grenzwert überschreiten, wie dies in Fig. 7 durch das Symbol "+" dargestellt ist, geht das Verfahren zu Schritt M4 über. In Schritt M4 gibt die Steuerungsvorrichtung 5 an der Ausgangsschnittstelle 52 ein Steuersignal aus, welches das Sicherheitsventil 2 in seine Öffnungsstellung schaltet, so dass Gas aus dem Tank 1 abgelassen wird.

Wenn in Schritt M12 ermittelt wird, dass die erfassten Zustandsgrößen den zweiten Grenzwert nicht überschreiten, wie dies in Fig. 7 durch das Symbol "-" dargestellt ist, kann das Verfahren direkt zu Schritt M3 oder, wie in Fig. 7 beispielhaft gezeigt, zu dem optionalen Schritt M2 übergehen.

Voraussetzung für Schritt M2 ist die kontinuierliche Erfassung der Zustandsgrößen. In diesem Fall erhält die Steuerungsvorrichtung 5 zeitaufgelöste Messwerte für die Zustandsgrößen und ermittelt in Schritt M2 einen Gradienten der Zustandsgrößen. Somit kann für die Temperatur und/oder den Druck eine Kenngröße ermittelt werden, welche repräsentiert ob sich Temperatur und/oder Druck im Tank 1 schnell oder langsam ändern.

In Schritt M21 vergleicht die Steuerungsvorrichtung 5 den ermittelten Gradienten mit einem vorbestimmten Änderungsgrenzwert. Wenn in Schritt M21 ermittelt wird, dass der Gradient kleiner als der Änderungsgrenzwert ist, geht das Verfahren zu Schritt M3 über.

In Schritt M3 gibt die Steuerungsvorrichtung 5 ein Steuersignal an das zumindest eine Peltier-Element 30 der jeweiligen Kühlvorrichtung 3 des jeweiligen Tanks 1 aus, wodurch das Peltier-Element 30 elektrisch leitend mit der Spannungsquelle V verbunden wird, und zwar derart, dass die erste Oberfläche 3a der Kühlvorrichtung 3 eine Wärmesenke bildet, um den Tank 1 zu kühlen. Wie oben bereits erläutert, kann das Verfahren M direkt zu Schritt M3 übergehen, wenn in Schritt M12 festgestellt wird, dass die erfassten Zustandsgrößen den zweiten Grenzwert nicht überschreiten. Wenn der optionale Schritt M2 ausgeführt wird, wird ein zusätzlicher Prüfschritt ausgeführt und das Kühlen des Tanks 1 mittels der Kühlvorrichtung 3 in Schritt M3 erfolgt nur dann, wenn in Schritt M21 ermittelt wird, dass der ermittelte Gradient kleiner dem vorbestimmten Änderungsgrenzwert ist.

Wenn in Schritt M21 ermittelt wird, dass der ermittelte Gradient größer oder gleich dem vorbestimmten Änderungsgrenzwert ist, wie dies in Fig. 7 durch das Symbol "-" gezeigt ist, geht das Verfahren M wieder zu Schritt M4 über. Das heißt, wenn sich die Zustandsgrößen im Tank schnell ändern, wird direkt Gas aus dem Tank abgelassen, insbesondere auch dann, wenn in Schritt M12 ermittelt wurde, dass die erfassten Zustandsgrößen den zweiten Grenzwert nicht überschreiten.

Wie in Fig. 7 weiterhin gezeigt, kann das Verfahren M zusätzlich die optionalen Schritte M41 und M5 umfassen. In Schritt M41 vergleicht die Steuerungsvorrichtung 5 die von der Sensoranordnung 9 erfassten Ist-Werte der Zustandsgrößen mit einem dritten Grenzwert, der kleiner als der zweite Grenzwert und vorzugsweise sogar kleiner der erste Grenzwert ist. Wenn in Schritt M41 ermittelt wird, dass die Zustandsgrößen den dritten Grenzwert unterschreiten, wie in Fig. 7 durch das Symbol "+" dargestellt, wird Schritt M5 ausgeführt, in dem das Ablassen von Gas aus dem Tank 1 gestoppt wird. Hierzu gibt die Steuerungsvorrichtung 5 ein weiteres Steuersignal an der Ausgangsschnittstelle 52 aus, um das Sicherheitsventil 2 von seiner Öffnungsstellung in seine Schließstellung zu schalten. Wenn in Schritt M41 ermittelt wird, dass die Zustandsgrößen den dritten Grenzwert noch nicht unterschreiten, wie in Fig. 7 durch das Symbol "-" dargestellt, wird weiterhin Schritt M4 ausgeführt, es wird also weiter Gas aus dem Tank 1 abgelassen.

## Patentansprüche

1. Tanksystem (100) für ein Brennstoffzellensystem (200), aufweisend:
einen sich entlang einer Längsachse (L1) erstreckenden Tank (1) zur Aufnahme von Gas, insbesondere Wasserstoff, mit einer die Längsachse (L1) entlang einer Umfangsrichtung (U1) umschließenden Außenumfangsfläche (1a);
eine thermisch an den Tank (1) gekoppelte Kühlvorrichtung (3) mit zumindest einem Peltier-Element (30), **dadurch gekennzeichnet, dass** die Kühlvorrichtung (3), welche bandförmig ausgeführt ist, an der Außenumfangsfläche (1a) des Tanks (1) angeordnet ist und sich entlang der Umfangsrichtung (U1) des Tanks (1) erstreckt; und
ein Befestigungselement (4), welches die Außenumfangsfläche (1a) des Tanks (1) in Umfangsrichtung (U1) umschließt und die Kühlvorrichtung (3) gegen die Außenumfangsfläche (1a) des Tanks (1) drückt.

2. Tanksystem (100) nach Anspruch 1, wobei der Tank (1) zumindest zwei entlang der Längsachse (L1) beabstandete Streben (15) aufweist, die von der Außenumfangsfläche (1a) vorstehen, wobei die Kühlvorrichtung (3) in Bezug auf die Längsachse (L1) zwischen zwei benachbarten Streben (15) angeordnet ist.

3. Tanksystem (100) nach Anspruch 2, zusätzlich aufweisend:
ein den Tank (1) umgebendes Tankgehäuse (8), wobei die Streben (15) sich zwischen der Außenumfangsfläche (1a) des Tanks (1) und dem Tankgehäuse (8) erstrecken.

4. Tanksystem (100) nach einem der voranstehenden Ansprüche, wobei eine Mehrzahl an Kühlvorrichtungen (3) an der Außenumfangsfläche (1a) des Tanks (1) in Bezug auf die Längsachse (L1) beabstandet zueinander angeordnet sind, wobei in einem ersten axialen Bereich (13) eine größere durch die Kühlvorrichtungen (3) definierte Kühlleistung installiert ist als in einem zweiten axialen Bereich (14), insbesondere dadurch, dass in dem ersten axialen Bereich (13) größerer Flächeninhalt der Außenumfangsfläche (1a) durch die Kühlvorrichtungen (3) belegt ist als in dem zweiten axialen Bereich (14).

5. Tanksystem (100) nach einem der voranstehenden Ansprüche, wobei das Befestigungselement (4) als Netz (40) ausgebildet ist.

6. Tanksystem (100) nach Anspruch 5, wobei das Netz (40) aus einem elastisch verformbaren Material ausgebildet und derart elastisch verformt ist, dass es eine senkrecht zur Längsachse (L1) gerichtete Vorspannkraft (F) auf die Kühlvorrichtung (3) ausübt, um die Kühlvorrichtung (3) gegen die Außenumfangsfläche (1a) des Tanks (1) zu drücken.

7. Tanksystem (100) nach einem der Ansprüche 1 bis 4, wobei das Befestigungselement (4) als Schrumpfschlauch (41) ausgebildet ist, welcher auf die Außenumfangsfläche (1a) des Tanks (1) aufgeschrumpft ist.

8. Tanksystem (100) nach Anspruch 7, wobei der Schrumpfschlauch (41) eine Vielzahl an Öffnungen (41A) aufweist, welche die Kühleinrichtung (3) bereichsweise freilegen und die entlang der Umfangsrichtung (U1) beabstandet zueinander angeordnet sind.

9. Tanksystem (100) nach einem der voranstehenden Ansprüche, zusätzlich aufweisend:
ein fluidisch leitend mit dem Tank (1) verbundenes Sicherheitsventil (2), welches aus einer Schließstellung in eine Auslösestellung schaltbar ist, um Gas aus dem Tank (1) abzulassen;
eine Sensoranordnung (9) zum Erfassen eines Drucks und/oder einer Temperatur im Tank (1) als Zustandsgrößen;
eine Steuerungsvorrichtung (5), welche signalleitend mit dem Sicherheitsventil (2), dem Peltier-Element (3) und der Sensoranordnung (4) verbunden und dazu eingerichtet ist:
- das Peltier-Element (3) zu energetisieren, um den Tank (1) zu kühlen, wenn zumindest eine von der Sensoranordnung (4) erfasste Zustandsgröße einen ersten Grenzwert überschreitet, und
- das Sicherheitsventil (2) in die Auslösestellung zu schalten, wenn die zumindest eine von der Sensoranordnung (4) erfasste Zustandsgröße einen zweiten Grenzwert überschreitet, der größer als der erste Grenzwert ist.

10. Brennstoffzellensystem (300), aufweisend:
eine Brennstoffzellenanordnung (310) mit zumindest einer Brennstoffzelle, einem Brennstoffeinlass (311) zum Zuführen von gasförmigem Brennstoff, einem Oxidationsgaseinlass (313) zum Zuführen von Oxidationsgas und einem Produktauslass (314) zum Abführen von Reaktionsprodukten;
eine mit dem Brennstoffeinlass (311) verbundene Brennstoffzufuhrleitung (302); und
ein Tanksystem (100) nach einem der voranstehenden Ansprüche;
wobei der Tank (1) fluidisch leitend mit der Brennstoffzufuhrleitung (302) verbunden ist.

## Claims

1. Tank system (100) for a fuel cell system (200), comprising:
a tank (1) extending along a longitudinal axis (L1) for receiving gas, in particular hydrogen, and having an outer circumferential surface (1a) surrounding the longitudinal axis (L1) along a circumferential direction (U1);
a cooling device (3) thermally coupled to the tank (1) and having at least one Peltier element (30), **characterized in that** the cooling device (3), which is designed in the form of a band, is arranged on the outer circumferential surface (1a) of the tank (1) and extends along the circumferential direction (U1) of the tank (1); and
a fastening element (4), which surrounds the outer circumferential surface (1a) of the tank (1) in the circumferential direction (U1) and presses the cooling device (3) against the outer circumferential surface (1a) of the tank (1).

2. Tank system (100) according to Claim 1, wherein the tank (1) has at least two struts (15), which are spaced apart along the longitudinal axis (L1) and protrude from the outer circumferential surface (1a), wherein the cooling device (3) is arranged between two adjacent struts (15) with respect to the longitudinal axis (L1).

3. Tank system (100) according to Claim 2, additionally comprising:
a tank housing (8) surrounding the tank (1), wherein the struts (15) extend between the outer circumferential surface (1a) of the tank (1) and the tank housing (8).

4. Tank system (100) according to any of the preceding claims, wherein a plurality of cooling devices (3) are arranged on the outer circumferential surface (1a) of the tank (1) spaced apart from each other with respect to the longitudinal axis (L1), wherein a greater cooling capacity defined by the cooling devices (3) is installed in a first axial region (13) than in a second axial region (14), in particular by way of a greater surface area of the outer circumferential surface (1a) being occupied by the cooling devices (3) in the first axial region (13) than in the second axial region (14).

5. Tank system (100) according to any of the preceding claims, wherein the fastening element (4) is in the form of a net (40).

6. Tank system (100) according to Claim 5, wherein the net (40) is formed from an elastically deformable material and is elastically deformed in such a way that it exerts a preload force (F) directed perpendicular to the longitudinal axis (L1) on the cooling device (1) in order to press the cooling device (3) against the outer circumferential surface (1a) of the tank (3).

7. Tank system (100) according to any of Claims 1 to 4, wherein the fastening element (4) is in the form of a shrink sleeve (41), which is shrink-fitted onto the outer circumferential surface (1a) of the tank (1).

8. Tank system (100) according to Claim 7, wherein the shrink sleeve (41) has a large number of openings (41A), which expose the cooling device (3) in regions and are arranged spaced apart from each other along the circumferential direction (U1).

9. Tank system (100) according to any of the preceding claims, additionally comprising:
a safety valve (2), which is connected to the tank (1) in a fluid-conducting manner and can be switched from a closed position to a release position in order to discharge gas from the tank (1);
a sensor arrangement (9) for detecting a pressure and/or a temperature in the tank (1) as state variables;
a control device (5), which is connected to the safety valve (2), the Peltier element (3) and the sensor arrangement (4) in a signal-conducting manner and is designed to:
- energize the Peltier element (3) in order to cool the tank (1) when at least one state variable detected by the sensor arrangement (4) exceeds a first limit value, and
- switch the safety valve (2) to the release position when the at least one state variable detected by the sensor arrangement (4) exceeds a second limit value, which is greater than the first limit value.

10. Fuel cell system (300), comprising:
a fuel cell assembly (310) having at least one fuel cell, a fuel inlet (311) for supplying gaseous fuel, an oxidation gas inlet (313) for supplying oxidation gas, and a product outlet (314) for discharging reaction products;
a fuel supply line (302) connected to the fuel inlet (311); and
a tank system (100) according to any of the preceding claims;
wherein the tank (1) is connected to the fuel supply line (302) in a fluid-conducting manner.

## Revendications

1. Système de réservoir (100) pour un système de piles à combustible (200), présentant :
un réservoir (1) s'étendant le long d'un axe longitudinal (L1) pour recevoir du gaz, notamment de l'hydrogène, avec une surface périphérique extérieure (1a) entourant l'axe longitudinal (L1) le long d'une direction périphérique (U1) ;
un dispositif de refroidissement (3) couplé thermiquement au réservoir (1) avec au moins un élément Peltier (30), **caractérisé en ce que** le dispositif de refroidissement (3), qui est conçu en forme de bande, est agencé sur la surface périphérique extérieure (1a) du réservoir (1) et s'étend le long de la direction périphérique (U1) du réservoir (1) ; et
un élément de fixation (4) qui entoure la surface périphérique extérieure (1a) du réservoir (1) dans la direction périphérique (U1) et presse le dispositif de refroidissement (3) contre la surface périphérique extérieure (1a) du réservoir (1).

2. Système de réservoir (100) selon la revendication 1, dans lequel le réservoir (1) présente au moins deux entretoises (15) espacées le long de l'axe longitudinal (L1), qui font saillie à partir de la surface périphérique extérieure (1a), le dispositif de refroidissement (3) étant agencé entre deux entretoises voisines (15) par rapport à l'axe longitudinal (L1).

3. Système de réservoir (100) selon la revendication 2, présentant en outre :
un boîtier de réservoir (8) entourant le réservoir (1), les entretoises (15) s'étendant entre la surface périphérique extérieure (1a) du réservoir (1) et le boîtier de réservoir (8).

4. Système de réservoir (100) selon l'une quelconque des revendications précédentes, dans lequel une pluralité de dispositifs de refroidissement (3) sont agencés sur la surface périphérique extérieure (1a) du réservoir (1) à distance les uns des autres par rapport à l'axe longitudinal (L1), une puissance de refroidissement plus importante définie par les dispositifs de refroidissement (3) étant installée dans une première zone axiale (13) que dans une deuxième zone axiale (14), notamment du fait que, dans la première zone axiale (13), une plus grande superficie de la surface périphérique extérieure (1a) est occupée par les dispositifs de refroidissement (3) que dans la deuxième zone axiale (14).

5. Système de réservoir (100) selon l'une quelconque des revendications précédentes, dans lequel l'élément de fixation (4) est réalisé sous forme de filet (40).

6. Système de réservoir (100) selon la revendication 5, dans lequel le filet (40) est réalisé en un matériau élastiquement déformable et est déformé élastiquement de telle sorte qu'il exerce une force de précontrainte (F) dirigée perpendiculairement à l'axe longitudinal (L1) sur le dispositif de refroidissement (3) afin de presser le dispositif de refroidissement (3) contre la surface périphérique extérieure (1a) du réservoir (1).

7. Système de réservoir (100) selon l'une quelconque des revendications 1 à 4, dans lequel l'élément de fixation (4) est réalisé sous forme de manchon thermorétractable (41) qui est rétracté sur la surface périphérique extérieure (1a) du réservoir (1).

8. Système de réservoir (100) selon la revendication 7, dans lequel le manchon thermorétractable (41) présente une pluralité d'ouvertures (41A) qui exposent par zones l'appareil de refroidissement (3) et qui sont agencées espacées les unes des autres dans la direction périphérique (U1).

9. Système de réservoir (100) selon l'une quelconque des revendications précédentes, présentant en outre :
une soupape de sécurité (2) reliée fluidiquement au réservoir (1), qui peut être commutée d'une position de fermeture à une position de déclenchement afin d'évacuer du gaz du réservoir (1) ;
un agencement de capteur (9) pour détecter une pression et/ou une température dans le réservoir (1) en tant que grandeurs d'état ;
un dispositif de commande (5) qui est relié pour la transmission de signaux à la soupape de sécurité (2), à l'élément Peltier (3) et à l'agencement de capteur (4) et qui est adapté pour :
- alimenter l'élément Peltier (3) en énergie afin de refroidir le réservoir (1) lorsqu'au moins une grandeur d'état détectée par l'agencement de capteur (4) dépasse une première valeur limite, et
- commuter la soupape de sécurité (2) dans la position de déclenchement lorsque l'au moins une grandeur d'état détectée par l'agencement de capteur (4) dépasse une deuxième valeur limite supérieure à la première valeur limite.

10. Système de pile à combustible (300), possédant :
un ensemble de piles à combustible (310) comprenant au moins une pile à combustible, une entrée de combustible (311) destinée à l'amenée de combustible gazeux, une entrée de gaz oxydant (313) destinée à l'amenée de gaz oxydant et une sortie de produit (314) destinée à l'évacuation des produits de réaction ;
une conduite d'amenée de combustible (302) reliée à l'entrée de combustible (311) ; et
Système de réservoir (100) selon l'une quelconque des revendications précédentes ;
le réservoir (1) étant relié fluidiquement à la conduite d'amenée de combustible (302).
